# EUROPÄISCHE PATENTSCHRIFT

(11) **EP 2 500 668 B1**
(45) Veröffentlichungstag und Bekanntmachung des Hinweises auf die Patenterteilung: **22.01.2020**
(21) Anmeldenummer: 12001663.9
(22) Anmeldetag: 10.03.2012
(51) Int. Cl.: F24F 13/02, F16L 47/26, F16L 25/14

(54) **Adapter**
Adapter
Adaptateur

(30) Priorität: 14.03.2011 DE 202011003955 U
(43) Veröffentlichungstag der Anmeldung: 19.09.2012
(73) Patentinhaber: Zehnder Group International AG, 5722 Gränichen (CH)
(72) Erfinder: Matt, Roger, 8855 Wangen (CH); Fiedel, Oliver, 85241 Hebertshausen (DE)
(74) Vertreter: Rausch Wanischeck-Bergmann Brinkmann

(56) Entgegenhaltungen:
- EP-A2- 1 777 468
- CA-A1- 2 430 324
- DE-A1- 4 135 130
- DE-U1-202009 007 214
- FR-A1- 2 942 531
- US-A1- 2002 197 948

## Beschreibung

Die Erfindung betrifft einen Adapter zum Anschluss von Luftleitungen an ein Lüftungsgerät, eine Luftverteileinrichtung und/oder dergleichen, mit einem einstückig ausgebildeten Grundkörper und einer Vielzahl strömungstechnisch voneinander getrennter Kanäle, die durch den Grundkörper verlaufen, wobei jeder Kanal einen ersten Anschluss und einen zweiten Anschluss aufweist, wobei jeder erste Anschluss zum Anschluss an ein Lüftungsgerät, eine Luftverteileinrichtung und/oder dergleichen ausgebildet ist und wobei jeder zweite Anschluss zur Anordnung an einer Luftleitung ausgebildet ist.

Derartige Adapter sind an sich aus dem Stand der Technik bekannt. Sie dienen der strömungstechnischen Verbindung einer Luftleitung einerseits mit einem Anschluss eines Lüftungsgeräts, einer Luftverteileinrichtung und/oder dergleichen andererseits. Unter einem Lüftungsgerät ist ein solches zu verstehen, das in Wohnungen und/oder Gebäuden zu Belüftungs-, Heiz- und/oder Kühlzwecken Verwendung findet. Ein derartiges Lüftungsgerät umfasst eine Luftfördereinrichtung, insbesondere ein Gebläse, und kann darüber hinaus über beispielsweise einen Wärmetauscher verfügen, welcher zum Transfer von Wärme von verbrauchter Abluft auf frische Zuluft dient.

Aus dem Stand der Technik sind insbesondere zentrale Lüftungsgeräte bekannt, die der Luftverteilung, dem Luftaustausch, der Wärmeübertragung, der Regulierung der Feuchtigkeit in der Luft und/oder dergleichen dienen. Hierzu weist das Lüftungsgerät Mittel auf, die aktiv eine Luftbewegung herbeiführen. Lüftungsgeräte weisen ähnliche Dimensionen wie ein Heizungskessel auf. Ein Lüftungsgerät wird üblicherweise im Keller eines Gebäudes, insbesondere Wohnhauses, aufgestellt. Der am Aufstellort zur Verfügung stehende Bauraum ist meist sehr begrenzt, so dass die Zugänglichkeit des bestimmungsgemäß aufgestellten Lüftungsgeräts erschwert ist.

Andererseits sind aus dem Stand der Technik zahlreiche Lüftungszubehörelemente bekannt. Die DE 41 35 130 C2 offenbart beispielsweise ein Raumgitter, das der strömungstechnischen Verbindung von einem zu klimatisierenden Raum einerseits und einem Luftleitungssystem andererseits dient. Eine ähnliche Vorrichtung ist zudem aus der DE 101 06 646 C1 bekannt, die einen Mauerkasten für die Durchleitung von Zu- und Abluft durch eine Wand offenbart. Bei derartigen Lüftungszubehörelementen handelt es sich gerade nicht um Lüftungsgeräte im Sinne der Erfindung. Den Lüftungszubehörelementen ist gemein, dass es sich um passive Vorrichtungen handelt, die nicht aktiv eine Luftbewegung herbeiführen. Zudem sind der zur Verfügung stehende Bauraum und die Zugänglichkeit von Lüftungszubehörelementen in der Praxis von geringer Bedeutung.

Die von einem Lüftungsgerät geförderte Zu- und Abluft wird mittels Luftleitungen in der Wohnung und/oder dem Gebäude verteilt. Je nach Einsatzzweck werden Luftleitungen mit einer bestimmten Größe und einem bestimmten Querschnitt bevorzugt. Zum alternativen Anschluss verschiedenartiger Luftleitungen an ein und dasselbe Lüftungsgerät werden gattungsgemäße Adapter verwendet. Ein solcher Adapter wird mit einer ersten Anschlussstelle an einem Flansch des Lüftungsgeräts montiert. Eine zweite Anschlussstelle des Adapters stellt einen Anschluss für eine bestimmte Größe und Geometrie einer Luftleitung bereit. Somit ermöglichen gattungsgemäße Adapter den Anschluss von Luftleitungen verschiedener Größe und Querschnitt an ein und dasselbe Lüftungsgerät.

Ein gattungsgemäßer Adapter ist aus der EP 1 777 468 A2 bekannt. Dieser verfügt über ein Gehäuse, das rechteckförmig ausgebildet ist. Es sind eingangsseitig wie ausgangsseitig jeweils Öffnungen vorgesehen, zwischen denen jeweils parallel zueinander ausgerichtete Kanäle verlaufen.

Aus der FR 2 942 531 ist ein Luftverteilgehäuse bekannt, das Eingangsöffnungen einerseits sowie Ausgangsöffnungen andererseits aufweist. Dabei sind wahlweise Eingangsöffnungen mit Ausgangsöffnungen über im Gehäuse angeordnete Schläuche miteinander verbunden. Über eine mittels einer Klappe verschließbare Gehäuseöffnung sind die Schläuche verwenderseitig für eine Montage beziehungsweise Demontage zugänglich.

Die DE 202 2009 007 214 U1 zeigt einen Ab- und Zuluftmauerkasten, der über ein Abluftrohr einerseits und ein Zuluftrohr andererseits verfügt. Außenseitig sind die Rohre mit einer Zierblende ausgerüstet, die Abdeckgitter bereitstellt.

Die CA 2 430 324 offenbart eine Luftverteileinrichtung, die ein Formteil aus einem Polyurethanschaum aufweist, das von einem Traggestellt gehalten ist. Das Formteil stellt Luftführungskanäle bereit, die jeweils eingangsseitig rechteckförmig und ausgangsseitig kreisförmig ausgebildet sind. Zur Anordnung des Formteils am Traggestell sind einzelne Schienen vorgesehen, zwischen denen das Formteil angeordnet ist, zu welchem Zweck das Formteil rechteckförmig ausgebildet ist.

Wenngleich sich die aus dem Stand der Technik bekannten Adapter im alltäglichen Praxiseinsatz bewährt haben, so besteht dennoch Verbesserungsbedarf, insbesondere hinsichtlich der Montage eines Adapters.

Es ist daher die **Aufgabe** der vorliegenden Erfindung einen gattungsgemäßen Adapter dahingehend weiterzuentwickeln, dass die Montage des Adapters verbessert, insbesondere vereinfacht wird.

Diese wird **gelöst** durch einen Adapter mit den Merkmalen nach Anspruch 1.

Die Erfindung schlägt vor, einen Adapter mit einer Vielzahl strömungstechnisch voneinander getrennter Kanäle auszubilden. Somit wird die Funktion mehrerer einzelner, aus dem Stand der Technik bekannter Adapter in einem einzigen Adapter vereint. Dies hat den Vorteil, dass die anzuordnenden Luftleitungen an dem Adapter vormontiert werden können, und der Adapter anschließend als vorkonfektionierte Baugruppe am Lüftungsgerät montierbar ist. Mit der Erfindung wird somit ermöglicht, mit nur einem Montageschritt eine Vielzahl von Luftleitungen an dazu vorgesehenen Anschlüssen des Lüftungsgeräts zu befestigen. Es ergeben sich gleichzeitig eine Vereinfachung und eine Zeitersparnis hinsichtlich der durchzuführenden Arbeiten.

Der erfindungsgemäße Adapter erleichtert aber auch aus einem weiteren Grund die Montage. Die aus dem Stand der Technik bekannten Einzeladapter müssen jeweils einzeln am Lüftungsgerät montiert werden. Hierzu ist es erforderlich, dass die einzelnen Adapter und Luftleitungen zueinander einen Mindestabstand einhalten, damit ausreichend Platz für die durchzuführenden Montageschritte an benachbarten Adaptern bleibt. Mit der Erfindung werden die Luftleitungen jedoch in vorkonfektionieren Baugruppen am Lüftungsgerät montiert. Es ist also nicht länger notwendig Montagefreiräume zwischen den einzelnen Luftleitungen vorzusehen. Daher ist es möglich, den erfindungsgemäßen Adapter im Vergleich zu einer entsprechenden Anzahl an bekannten Einzeladaptern wesentlich kompakter auszubilden. Mit der Erfindung werden also nicht nur die insgesamt durchzuführenden Montageschritte erheblich reduziert, sondern es wird auch eine besonders kompakte Ausgestaltung des Adapters ermöglicht. In synergetischer Weise verstärken sich die Einzelwirkungen untereinander, so dass mit dem erfindungsgemäßen Adapter wesentlich weniger Bauraum am Einsatzort benötigt wird, und sich gleichzeitig die durchzuführenden Montageschritte erheblich vereinfachen und insgesamt verkürzen. Somit kann der erfindungsgemäße Adapter selbst unter solchen Einbaubedingungen montiert werden, unter denen aufgrund des zur Verfügung stehenden Bauraums eine Montage von Einzeladaptern nicht möglich wäre.

Die einzelnen Kanäle des Adapters sind luftdicht ausgebildet, so dass beim Anschluss einer Luftleitung einerseits und einem Lüftungsgerät andererseits eine luftdichte Verbindung zwischen beiden Teilen bereitgestellt wird. Die ersten und die zweiten Anschlüsse des Adapters können im Querschnitt beispielsweise rund oder oval ausgebildet sein. Dies hängt im Wesentlichen von den jeweiligen am Einsatzort benötigten Geometrien ab. Erfindungswesentlich ist, dass die Anschlüsse des Adapters im Grunde einen beliebigen Querschnitt aufweisen können, und sich der Adapter somit für eine unbegrenzte Vielzahl von denkbaren Lüftungsgeräten, Luftverteileinrichtungen und/oder dergleichen einerseits und Luftleitungen andererseits eignet.

In einem bevorzugten Anwendungsfall ist der Adapter als Doppeladapter ausgebildet. Dies bedeutet, dass der Adapter zwei Kanäle aufweist. Bei handelsüblichen Lüftungsgeräten sind somit mit einem solchen Adapter genau zwei Luftleitungen anschließbar, wobei eine Luftleitung beispielsweise für die Zuluft und die andere Luftleitung für die Abluft vorgesehen ist. Eine Zuluft- und eine Abluftleitung können somit jeweils in einem einzigen Montageschritt montiert werden.

Vorzugsweise ist der Adapter aus einem Kunststoff mit einem hohen Wärmeleitwiderstand ausgebildet. Dies hat den Vorteil, dass trotz des Einsatzes des Adapters keine bemerkenswerten Wärme- bzw. Energieverluste auftreten. Ein geeigneter Kunststoff ist beispielsweise Polypropylen (PP). Als besonders geeignet hat sich expandiertes Polypropylen herausgestellt. Dieses weist eine Dichte im Bereich von 35 g/l bis 50 g/l auf, beispielsweise 42 g/l. Die Wärmeleitfähigkeit beträgt bei 35 g/l 0,033 W/mK, bei 42 g/l 0,034 W/mK und bei 50 g/l 0,036 W/mK.

Erfindungsgemäß weist der Adapter einen einstückigen Grundkörper auf. Der Grundkörper des Adapters ist derjenige Teil, der zur Erreichung der wesentlichen technischen Wirkungen des Adapters dient. Dies umfasst vorliegend die Bereitstellung mehrerer strömungstechnisch voneinander getrennter Kanäle

mit jeweils einem ersten und einem zweiten Anschluss. Der Grundkörper ist vorzugsweise ein Formteil aus Kunststoff, und wird durch ein Spritzgussverfahren hergestellt. Hierdurch wird eine einstückige Ausbildung des Grundkörpers erreicht. In vorteilhafter Weise ist ein derartiger Grundkörper einfach und kostengünstig herzustellen.

Erfindungsgemäß verlaufen die Kanäle zumindest abschnittsweise quer zueinander. Es kann vorgesehen sein, dass sich die Kanäle ausgehend von den ersten Anschlüssen in Richtung der zweiten Anschlüsse voneinander weg erstrecken. Es kann aber auch vorgesehen sein, dass die Kanäle ausgehend von den ersten Anschlüssen in Richtung der zweiten Anschlüsse aufeinander zulaufen. Eine sinnvolle Ausbildung hängt von den Einbaubedingungen des Adapters am Einsatzort ab. Entscheidend ist, dass sich die Kanäle mit Bezug auf die Querschnittsebene der ersten Anschlüsse nicht senkrecht erstrecken müssen, wenngleich sie dies ebenfalls können. Dadurch ergeben sich große Freiheiten in der Gestaltung des Adapters, wodurch ein Anschluss der Luftleitungen an ein Lüftungsgerät auch unter schwierigsten Einbaubedingungen ermöglicht wird. Denkbar ist beispielsweise auch ein Abknicken der zweiten Anschlüsse relativ zu den ersten Anschlüssen, wobei sich dann im Falle eines rechten Winkels die zweiten Anschlüsse in einer Ebene parallel zur Querschnittsfläche der ersten Anschlüsse erstrecken. Die Kanäle können über ihre gesamte Längsersteckung quer zueinander verlaufen, können jedoch auch nur abschnittsweise quer zueinander verlaufen. Im letzteren Fall können die Querschnittsflächen der jeweiligen ersten und zweiten Anschlüsse eines Kanals in zueinander parallelen Ebenen liegen, wenngleich durch den abschnittsweise quer verlaufenden Kanal zueinander verschoben. Mit Vorteil wird durch die Erfindung also nicht nur eine vereinfachte Montage erreicht, sondern auch eine verbesserte Nutzung des zur Verfügung stehenden Bauraums.

Erfindungsgemäß verjüngt sich der Adapter von den ersten Anschlüssen ausgehend in Richtung der zweiten Anschlüsse. Je geringer der Durchmesser der zweiten Anschlüsse im Vergleich zum Durchmesser der ersten Anschlüsse ist, desto stärker kann die Verjüngung ausgebildet sein. Es ergibt sich hier der Vorteil der weiteren Einsparung von benötigtem Bauraum. Der Adapter kann noch kompakter ausgebildet werden.

Gemäß einer vorteilhaften Weiterbildung der Erfindung sind die zweiten Anschlüsse als außenliegende Anschlussstutzen ausgebildet, wobei der Außendurchmesser des jeweiligen Anschlussstutzens kleiner als der Innendurchmesser einer anzuordnenden Luftleitung ist. Dies umfasst auch den Fall, bei dem der Innendurchmesser der anzuordnenden Luftleitung gleich groß oder sogar etwas kleiner als der Außendurchmesser des jeweiligen Anschlussstutzens ist, wobei aber die Luftleitung dehnbar ist, und dadurch auf den Anschlussstutzen aufziehbar ist. Der Anschlussstutzen ist also derart ausgebildet, dass er sich aus der zweiten Anschlussseite des Adapters heraus erstreckt. Beispielsweise kann der Anschlussstutzen als umlaufender Fortsatz mit einem Kragen ausgebildet sein. Die Luftleitung ist auf den Anschlussstutzen aufschiebbar. Im Fall des umlaufenden Fortsatzes mit dem Kragen kann die Luftleitung den Kragen hintergreifen, und ist dann besonders sicher und haltbar am Anschlussstutzen festgelegt.

Gemäß einer vorteilhaften Weiterbildung der Erfindung sind die zweiten Anschlüsse als innenliegende Anschlussstutzen ausgebildet, wobei der Innendurchmesser des jeweiligen Anschlussstutzens größer als der Außendurchmesser einer anzuordnenden Luftleitung ist. Dies umfasst auch den Fall, bei dem der Außendurchmesser der anzuordnenden Luftleitung gleich groß oder sogar etwas größer als der Innendurchmesser des jeweiligen Anschlussstutzens ist. Dies setzt eine verformbare, insbesondere kompressible Luftleitung voraus. Die Luftleitung wird nämlich in den innenliegenden Anschlussstutzen eingeschoben. Zwischen Luftleitung und Anschlussstutzen besteht dabei eine reibschlüssige Verbindung, insbesondere noch unterstützt durch beispielsweise einen O-Ring, so dass die Luftleitung in dem Anschlussstutzen befestigt ist.

Bevorzugt weist der Anschlussstutzen umlaufende Rillen auf seiner Innenoberfläche auf. Dadurch wird bei eingeschobener Luftleitung eine Kombination aus einer kraft- und einer formschlüssigen Verbindung zwischen Luftleitung und Anschlussstutzen erreicht. Besonders vorteilhaft sind die umlaufenden Rillen auf der Innenoberfläche des Anschlussstutzens, wenn die anzuordnende Luftleitung auf der Außenoberfläche gewellt ausgebildet ist. Die Wellen der Luftleitung können dann mit den umlaufenden Rillen auf der Innenoberfläche des Anschlussstutzens zusammenwirken. Zusätzliche Verbindungsmittel wie beispielsweise O-Ringe sind denkbar. In vorteilhafter Weise wird hierdurch eine einfache und sichere Verbindung zwischen Anschlussstutzen und Luftleitung erreicht.

Gemäß einer vorteilhaften Weiterbildung der Erfindung weist jeder zweite Anschluss Mittel zum kraftschlüssigen Festlegen einer Luftleitung auf. Diese Mittel umfassen O-Ringe, Manschetten, Splinte und/oder dergleichen. Entscheidend ist, dass durch diese Mittel beispielsweise die Reibkräfte zwischen Luftleitung und Anschluss erhöht werden, was zu einer sichereren Verbindung derselben führt.

Gemäß einer vorteilhaften Weiterbildung der Erfindung weisen die ersten Anschlüsse aller Kanäle eine gemeinsame Querschnittsebene auf. Auch die zweiten Anschlüsse aller Kanäle können eine gemeinsame Querschnittsebene aufweisen, wobei diese nicht mit der gemeinsamen Querschnittsebene der ersten Anschlüsse aller Kanäle zusammenfällt. Es kann somit sichergestellt werden, dass die ersten bzw. die zweiten Anschlüsse die gleiche Ausrichtung aufweisen. Dies erleichtert den Anschluss an das Lüftungsgerät bzw. den Anschluss der Luftleitungen. Insbesondere in Kombination mit zumindest abschnittsweise quer zueinander verlaufenden Kanälen kann also trotzdem noch eine homogene Ausrichtung der Anschlüsse erreicht werden.

Weitere Vorteile und Merkmale der Erfindung ergeben sich aus der nachfolgenden Figurenbeschreibung. Dabei zeigen:
- Fig. 1:: eine erste Ausführungsform eines erfindungsgemäßen Adapters in einer Seitenansicht,
- Fig. 2:: die erste Ausführungsform des erfindungsgemäßen Adapters in einer Draufsicht auf die zweiten Anschlüsse,
- Fig. 3:: die erste Ausführungsform des erfindungsgemäßen Adapters in einer anderen Seitenansicht,
- Fig. 4:: eine zweite Ausführungsform eines erfindungsgemäßen Adapters in einer Draufsicht auf die ersten Anschlüsse,
- Fig. 5:: die zweite Ausführungsform des erfindungsgemäßen Adapters in einer Seitenansicht,
- Fig. 6:: die zweite Ausführungsform des erfindungsgemäßen Adapters in einer Draufsicht auf die ersten Anschlüsse, und
- Fig. 7:: die zweite Ausführungsform des erfindungsgemäßen Adapters in einer anderen Seitenansicht.

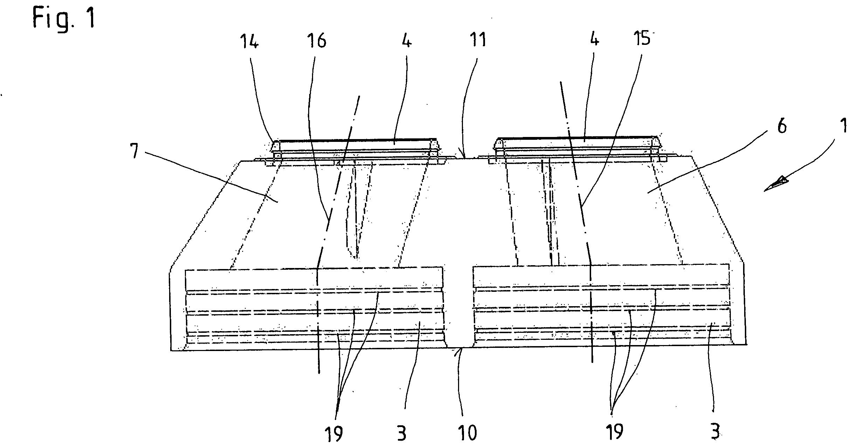

Fig. 1 zeigt eine erste Ausführungsform eines erfindungsgemäßen Adapters 1. Der Adapter 1 ist als einstückiger Körper ausgebildet. Durch den Adapter 1 verlaufen zwei strömungstechnisch voneinander getrennte Kanäle 6, 7. Die Kanäle 6, 7 sind als durchgehende Öffnungen in dem Adapter 1 ausgebildet. Jeder Kanal weist einen ersten Anschluss 3 und einen zweiten Anschluss 4 auf. Die ersten Anschlüsse 3 und die zweiten Anschlüsse 4 sind auf einander gegenüberliegenden Seiten des Adapters 1 angeordnet. Diese einander gegenüberliegenden Seiten des Adapters 1 bilden eine erste Querschnittsebene 10 und eine zweite Querschnittsebene 11. Die ersten Anschlüsse 3 liegen in der ersten Querschnittsebene 10. Die ersten Anschlüsse 3 sind dadurch in ihrer Lage zueinander festgelegt, und insbesondere gleich orientiert. Die ersten Anschlüsse 3 korrespondieren dabei zu zwei nebeneinander angeordneten Anschlüssen des Lüftungsgeräts. Hierdurch ergibt sich eine einfache Montage, die kein Nachjustieren oder dergleichen erfordert. Die zweiten Anschlüsse 4 liegen in der zweiten Querschnittsebene 11.

Die ersten Anschlüsse 3 sind als Anschlussstutzen mit innenumlaufenden Rillen 19 ausgebildet. Die ersten Anschlüsse 3 weisen einen Anschlag auf, durch den ein Aufschieben des Adapters 1 auf die Anschlüsse eines Lüftungsgeräts begrenzt wird. Die Rillen 19 dienen der Verrastung der ersten Anschlüsse 3 mit den dazu korrespondierenden Anschlussstellen des Lüftungsgeräts.

Die zweiten Anschlüsse 4 sind bei dieser ersten Ausführungsform als umlaufende Fortsätze mit einem Kragen 14 ausgebildet. Diese Ausbildung ermöglicht ein einfaches Aufschieben einer Luftleitung auf die zweiten Anschlüsse 4. Die Luftleitung hintergreift im endmontierten Zustand mit einem Ende den Kragen 14, und ist somit fest mit dem zweiten Anschluss 4 verbunden.

Die beiden gegenüberliegenden Querschnittsebenen 10, 11 sind parallel zueinander ausgerichtet. Wenn es erforderlich ist, beispielsweise weil der Bauraum am Einsatzort eingeschränkt ist, können jedoch die Querschnittsebenen 10, 11 auch schräg zueinander ausgerichtet sein.

Die beiden strömungstechnisch voneinander getrennten Kanäle 6, 7 weisen jeweils eine Strömungslinie 15, 16 auf. Die Strömungslinie 15, 16 veranschaulicht schematisch eine mögliche Strömungsrichtung durch den Kanal 6, 7. Bei diesem ersten Ausführungsbeispiel verlaufen die Kanäle 6, 7 beziehungsweise die Strömungslinien 15, 16 quer zueinander. Von den ersten Anschlüssen 3 ausgehend verlaufen die Strömungslinien 15, 16 in Richtung der zweiten Anschlüsse 4 aufeinander zu. Dies hat den Vorteil, dass die zweiten Anschlüsse 4 möglichst nah beieinander liegen, und somit der erforderliche Bauraum weiter verringert werden kann.

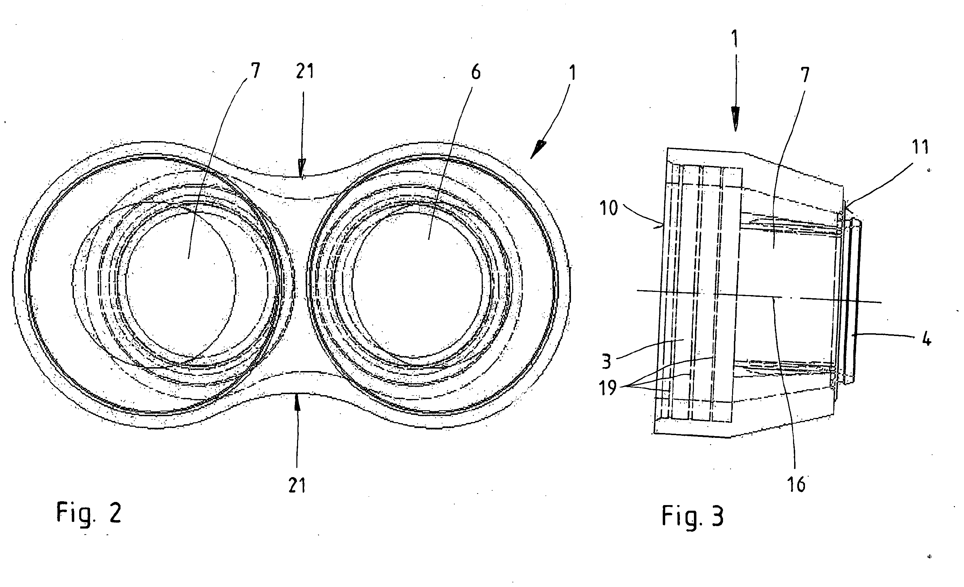

Die Fig. 2 zeigt dieses erste Ausführungsbeispiel des Adapters 1 in einer Draufsicht auf die zweiten Anschlüsse 4. Die sichtbaren und nicht-sichtbaren Körperkanten der ersten Anschlüsse 3 sind ebenfalls dargestellt. Der Fig. 2 ist zu entnehmen, dass sowohl die ersten Anschlüsse 3 als auch die zweiten Anschlüsse 4 einen kreisrunden Querschnitt aufweisen. Es sind grundsätzlich aber auch andere Querschnittsformen denkbar, insbesondere für die zweiten Anschlüsse 4. Besonders bevorzugt ist hierbei auch ein ovaler Querschnitt der zweiten Anschlüsse 4, welcher von dieser ersten Ausführungsform ebenfalls umfasst sein soll. Die Anschlussgeometrie der ersten Anschlüsse 3 hängt selbstverständlich von den Anschlüssen des Lüftungsgeräts, der Luftverteileinrichtung und/oder dergleichen ab, und der Fachmann ist hierbei selbstverständlich in der Lage die jeweiligen Anschlussnormen des Lüftungsgeräts, der Luftverteileinrichtung und/oder dergleichen bei der Ausbildung der ersten Anschlüsse 3 des erfindungsgemäßen Adapters 1 anzuwenden.

Der Adapter 1 umfasst mit Bezug auf die in der Fig. 2 gewählte Darstellung eine Verjüngung 21. Die Verjüngung 21 erleichtert die Handhabung des Adapters 1, da ein Greifen des Adapters 1 erleichtert wird. Insbesondere wird durch die Verjüngung 21 ein "Rütteln" am Adapter 1 bei der Montage oder Demontage am Lüftungsgerät, der Luftverteileinrichtung und/oder dergleichen erleichtert.

Die Fig. 3 zeigt die erste Ausführungsform des Adapters 1 in einer weiteren Seitenansicht. Der Fig. 3 ist zu entnehmen, dass sich der Adapter 1 auch in den in der Figur 1 nicht entnehmbaren Ebenen ausgehend vom ersten Anschluss 3 in Richtung des zweiten Anschlusses 4 verjüngt. Hierdurch wird für den Adapter 1 nur ein minimaler Bauraum am Einsatzort benötigt.

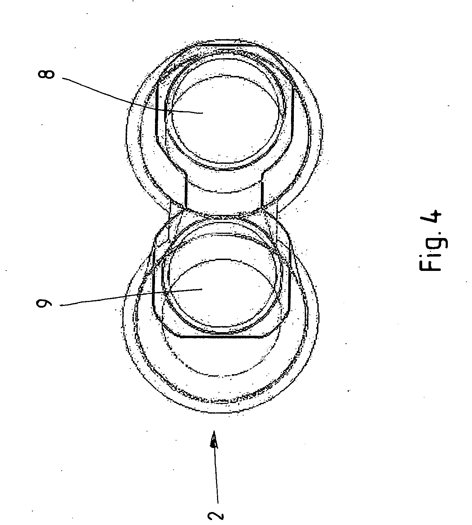

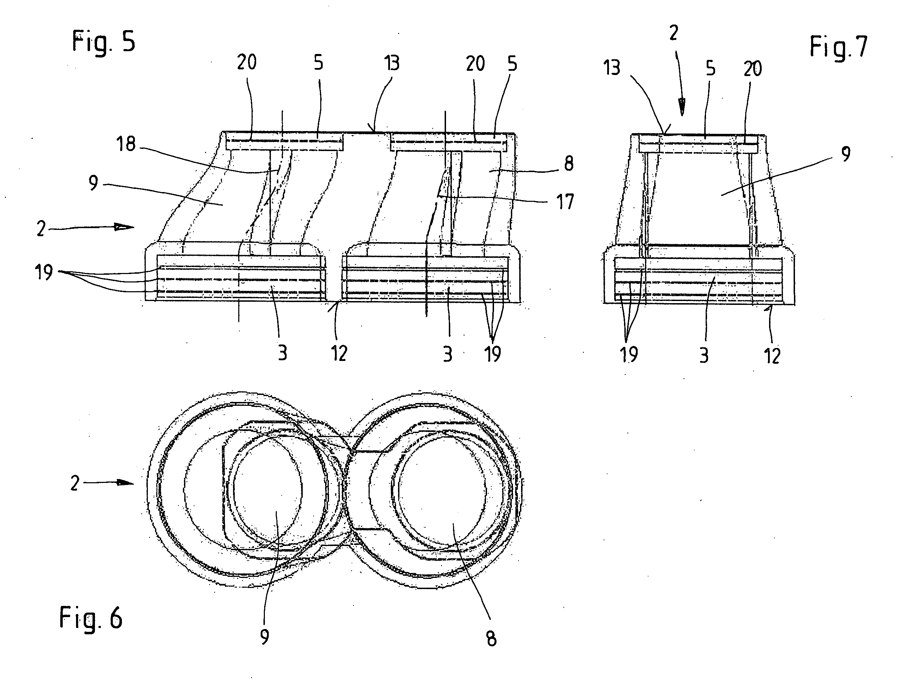

Die Fign. 4 bis 7 zeigen eine zweite Ausführungsform eines erfindungsgemäßen Adapters 2. Diese zweite Ausführungsform des Adapters 2 ist ähnlich der ersten Ausführungsform des Adapters 1 ausgebildet. Insbesondere in der Fig. 5 werden die Unterschiede zwischen beiden Adaptern 1, 2 deutlich. So sind die zweiten Anschlüsse 5 des Adapters 2 als innenliegende Anschlussstutzen ausgebildet. Das Anschlussprinzip der zweiten Anschlüsse 5 ähnelt dabei dem Anschlussprinzip der ersten Anschlüsse 3. So weisen die zweiten Anschlüsse 5 einen Anschlag auf, bis zu welchem eine Luftleitung in die zweiten Anschlüsse 5 einschiebbar ist. Die zweiten Anschlüsse 5 weisen Rillen 20 auf. Die Rillen 20 dienen der Ausbildung eines festen Verbunds zwischen Adapter 2 und Luftleitungen, insbesondere wenn bei diesen die Außenoberfläche gewellt ausgebildet ist. Insbesondere kann auch vorgesehen sein, dass eine Luftleitung einen umlaufenden Dichtring trägt, der bei der Montage am Adapter 2 mit dem zweiten Anschluss 5, und dabei insbesondere mit den Rillen 20 zusammenwirkt. Hierdurch lässt sich eine besonders sichere Verbindung zwischen dem Adapter 2 und den einzelnen Luftleitungen ausbilden. Es kann auch vorgesehen sein, dass im Bereich der zweiten Anschlüsse 5 Sicherungssplinte einführbar sind. Diese können in ein äußeres Wellental einer gewellten Luftleitung eingreifen, so dass die Luftleitungen jeweils formschlüssig in den zweiten Anschlüssen 5 gehalten werden können.

Wie auch die erste Ausführungsform des Adapters 1 weist der Adapter 2 zwei strömungstechnisch voneinander getrennte Kanäle 8, 9 auf. Der Verlauf einer Strömungsrichtung durch die Kanäle 8, 9 ist schematisch durch Strömungslinien 17, 18 angedeutet. Auch bei diesem Adapter 2 ist vorgesehen, dass die Strömungslinien 17, 18 nicht parallel zueinander verlaufen. Auch bei diesem Adapter 2 sind zwei zueinander parallele Querschnittsebenen 12, 13 vorgesehen. Der Adapter 2 verjüngt sich ausgehend von den ersten Anschlüssen 3 in Richtung der zweiten Anschlüsse 5.

Bemerkenswert bei dieser zweiten Ausführungsform des Adapters 2 ist auch, dass die zweiten Anschlüsse 5, bezogen auf eine Projektion der ersten Anschlüsse 3 auf die Querschnittsebene 13, versetzt zu diesen ersten Anschlüssen 3 liegen. Hierdurch werden die zahlreichen Möglichkeiten der erfindungsgemäßen Adapter 1, 2 deutlich, die zur Anpassung der zweiten Anschlüsse 5 an den zur Verfügung stehenden Bauraum gegeben sind.

Mit der Erfindung wird somit ein Adapter 1, 2 erreicht, der einerseits eine flexible Verlegung von Luftleitungen zum Lüftungsgerät, Lüftungsverteileinrichtung und/oder dergleichen in Abhängigkeit des zur Verfügung stehenden Bauraums ermöglicht, und andererseits eine besonders einfache Montage der Luftleitungen am Lüftungsgerät, Luftverteileinrichtung und/oder dergleichen ermöglicht. Durch den erfindungsgemäßen Adapter 1, 2 ergeben sich synergetische Wirkungen, da gleichzeitig das Problem der bauraumbedingten schwierigen Verlegung der Luftleitungen am Einsatzort und die schwierige Montage der Luftleitungen am Lüftungsgerät gelöst werden.

Die beiden Ausführungsformen des Adapters 1, 2 dienen der Veranschaulichung der Möglichkeiten im Rahmen der Erfindung. Einzelne Merkmale beider Ausführungsformen lassen sich untereinander austauschen, beziehungsweise durch alternative Ausgestaltungen gemäß den Ausführungen in diesem Dokument ersetzen.

Wenn im vorliegenden Dokument von einem Lüftungsgerät die Rede ist, so umfasst dies auch Luftverteileinrichtungen und/oder dergleichen.

### Bezugszeichenliste

- 1: Adapter
- 2: Adapter
- 3: erster Anschluss
- 4: zweiter Anschluss
- 5: zweiter Anschluss
- 6: Kanal
- 7: Kanal
- 8: Kanal
- 9: Kanal
- 10: Querschnittsebene
- 11: Querschnittsebene
- 12: Querschnittsebene
- 13: Querschnittsebene
- 14: Kragen
- 15: Strömungslinie
- 16: Strömungslinie
- 17: Strömungslinie
- 18: Strömungslinie
- 19: Rillen
- 20: Rillen
- 21: Verjüngung

## Patentansprüche

1. Adapter (1, 2) zum Anschluss von Luftleitungen an ein Lüftungsgerät, eine Luftverteileinrichtung und/oder dergleichen, mit einem einstückig ausgebildeten Grundkörper und mit einer Vielzahl strömungstechnisch voneinander getrennter Kanäle (6, 7, 8, 9), die durch den Grundkörper verlaufen, wobei jeder Kanal (6, 7, 8, 9) einen ersten Anschluss (3) und einen zweiten Anschluss (4, 5) aufweist, wobei jeder erste Anschluss (3) zum Anschluss an ein Lüftungsgerät, eine Luftverteileinrichtung und/oder dergleichen ausgebildet ist und wobei jeder zweite Anschluss (4, 5) zur Anordnung einer Luftleitung ausgebildet ist, **dadurch gekennzeichnet, dass** die Kanäle (6, 7, 8, 9) zumindest abschnittsweise quer zueinander verlaufen und dass sich der Grundkörper von den ersten Anschlüssen (3) ausgehend in Richtung der zweiten Anschlüsse (4, 5) verjüngt.

2. Adapter (1, 2) nach Anspruch 1, **dadurch gekennzeichnet, dass** die ersten Anschlüsse (3) im Querschnitt jeweils rund oder oval ausgebildet sind.

3. Adapter (1, 2) nach Anspruch 1 oder 2, **dadurch gekennzeichnet, dass** die zweiten Anschlüsse (4, 5) im Querschnitt jeweils rund oder oval ausgebildet sind.

4. Adapter (1, 2) nach einem der vorhergehenden Ansprüche, **dadurch gekennzeichnet, dass** die zweiten Anschlüsse (4, 5) als außenliegende Anschlussstutzen ausgebildet sind, wobei der Außendurchmesser des jeweiligen Anschlussstutzens kleiner als der Innendurchmesser einer anzuordnenden Luftleitung ist.

5. Adapter (1, 2) nach Anspruch 4, **dadurch gekennzeichnet, dass** jeder Anschlussstutzen als umlaufender Fortsatz mit einem Kragen ausgebildet ist.

6. Adapter (1, 2) nach einem der vorhergehenden Ansprüche, **dadurch gekennzeichnet, dass** die zweiten Anschlüsse (4, 5) als innenliegende Anschlussstutzen ausgebildet sind, wobei der Innendurchmesser des jeweiligen Anschlussstutzens größer als der Außendurchmesser einer anzuordnenden Luftleitung ist.

7. Adapter (1, 2) nach Anspruch 6, **dadurch gekennzeichnet, dass** jeder Anschlussstutzen umlaufende Rillen (19, 20) auf seiner Innenoberfläche aufweist.

8. Adapter (1, 2) nach einem der vorhergehenden Ansprüche, **dadurch gekennzeichnet, dass** jeder zweite Anschluss (4, 5) Mittel zum kraftschlüssigen Festlegen einer Luftleitung aufweist.

9. Adapter (1, 2) nach einem der vorhergehenden Ansprüche, **dadurch gekennzeichnet, dass** der Adapter (1, 2) aus einem Kunststoff mit einem hohen Wärmeleitwiderstand, beispielsweise Polypropylen (PP), ausgebildet ist

10. Adapter (1, 2) nach einem der vorhergehenden Ansprüche, **dadurch gekennzeichnet, dass** die ersten Anschlüsse (3) aller Kanäle (6, 7, 8, 9) eine gemeinsame Querschnittsebene (10, 12) aufweisen.

11. Adapter (1, 2) nach einem der vorhergehenden Ansprüche, **dadurch gekennzeichnet, dass** die zweiten Anschlüsse (4, 5) aller Kanäle (6, 7, 8, 9) eine gemeinsame Querschnittsebene (11, 13) aufweisen.

## Claims

1. An adapter (1, 2) for connecting air ducts to a ventilation device, an air distribution device and/or the like, comprising a base body formed in one piece and comprising a plurality of channels (6, 7, 8, 9) which are fluidically separated from each other and which extend through the base body, wherein each channel (6, 7, 8, 9) comprises a first port (3) and a second port (4, 5), wherein each first port (3) is configured for being connected to a ventilation device, an air distribution device and/or the like, and wherein each second port (4, 5) is configured for arranging an air duct, **characterized in that** the channels (6, 7, 8, 9) extend transversely with respect to each other at least in some sections and that the base body tapers from the first ports (3) in the direction of the second ports (4, 5).

2. An adapter (1, 2) according to claim 1, **characterized in that** the cross sections of the first ports (3) each have a round or oval shape.

3. An adapter (1, 2) according to claim 1 or 2, **characterized in that** the cross sections of the second ports (4, 5) each have a round or oval shape.

4. An adapter (1, 2) according to one of the preceding claims, **characterized in that** the second ports (4, 5) are configured as external connecting pieces, wherein the outer diameter of the respective connecting piece is smaller than the inner diameter of an air duct to be arranged.

5. An adapter (1, 2) according to claim 4, **characterized in that** each connecting piece is configured as a circumferential extension with a collar.

6. An adapter (1, 2) according to one of the preceding claims, **characterized in that** the second ports (4, 5) are configured as internal connecting pieces, wherein the inner diameter of the respective connecting piece is larger than the outer diameter of an air duct to be arranged.

7. An adapter (1, 2) according to claim 6, **characterized in that** each connecting piece comprises circumferential grooves (19, 20) on the inner surface thereof.

8. An adapter (1, 2) according to one of the preceding claims, **characterized in that** each second port (4, 5) comprises means for fixing an air duct in a friction-locked manner.

9. An adapter (1, 2) according to one of the preceding claims, **characterized in that** the adapter (1, 2) is made of a plastic material having a high thermal conductivity resistance, for example polypropylene (PP).

10. An adapter (1, 2) according to one of the preceding claims, **characterized in that** the first ports (3) of all channels (6, 7, 8, 9) comprise a common cross-sectional plane (10, 12).

11. An adapter (1, 2) according to one of the preceding claims, **characterized in that** the second ports (4, 5) of all channels (6, 7, 8, 9) comprise a common cross-sectional plane (11, 13).

## Revendications

1. Adaptateur (1, 2) pour le raccordement de conduites d'air à un appareil de ventilation, à un dispositif distributeur d'air et/ou similaire, comprenant un corps de base formé d'un seul tenant et comprenant une pluralité de canaux (6, 7, 8, 9) séparés l'un de l'autre de manière fluidique, qui s'étendent à travers le corps de base, chaque canal (6, 7, 8, 9) comprenant un premier raccordement (3) et un deuxième raccordement (4, 5), chaque premier raccordement (3) étant configuré pour être raccordé à un appareil de ventilation, à un dispositif distributeur d'air et/ou similaire et chaque deuxième raccordement (4, 5) étant configuré pour y disposer une conduite d'air, **caractérisé en ce que** les canaux (6, 7, 8, 9) s'étendent transversalement l'un par rapport à l'autre au moins dans certaines sections et que le corps de base s'effile à partir des premiers raccordements (3) dans la direction des deuxièmes raccordements (4, 5).

2. Adaptateur (1, 2) selon la revendication 1, **caractérisé en ce que** les sections transversales des premiers raccordements (3) ont chacune une forme ronde ou ovale.

3. Adaptateur (1, 2) selon la revendication 1 ou la revendication 2, **caractérisé en ce que** les sections transversales des deuxièmes raccordements (4, 5) ont chacune une forme ronde ou ovale.

4. Adaptateur (1, 2) selon l'une des revendications précédentes, **caractérisé en ce que** les deuxièmes raccordements (4, 5) sont configurés comme des manchons de raccordement extérieurs, le diamètre extérieur du manchon de raccordement respectif étant plus petit que le diamètre intérieur d'une conduite d'air à disposer.

5. Adaptateur (1, 2) selon la revendication 4, **caractérisé en ce que** chaque manchon de raccordement est configuré comme un prolongement circonférentiel avec un col.

6. Adaptateur (1, 2) selon l'une des revendications précédentes, **caractérisé en ce que** les deuxièmes raccordements (4, 5) sont configurés comme des manchons de raccordement intérieurs, le diamètre intérieur du manchon de raccordement respectif étant plus grand que le diamètre extérieur d'une conduite d'air à disposer.

7. Adaptateur (1, 2) selon la revendication 6, **caractérisé en ce que** chaque manchon de raccordement comprend des rainures circonférentielles (19, 20) sur sa face intérieure.

8. Adaptateur (1, 2) selon l'une des revendications précédentes, **caractérisé en ce que** chaque deuxième raccordement (4, 5) comprend des moyens pour fixer une conduite d'air par adhérence.

9. Adaptateur (1, 2) selon l'une des revendications précédentes, **caractérisé en ce que** l'adaptateur (1, 2) est fabriqué en une matière synthétique ayant une haute résistance thermo-conductrice, par exemple en polypropylène (PP).

10. Adaptateur (1, 2) selon l'une des revendications précédentes, **caractérisé en ce que** les premiers raccordements (3) de tous les canaux (6, 7, 8, 9) comprennent un plan transversal commun (10, 12).

11. Adaptateur (1, 2) selon l'une des revendications précédentes, **caractérisé en ce que** les deuxièmes raccordements (4, 5) de tous les canaux (6, 7, 8, 9) comprennent un plan transversal commun (11, 13).
